# FASCICULE DE BREVET EUROPEEN

(11) **EP 3 201 581 B1**
(45) Date de publication et mention de la délivrance du brevet: **22.09.2021**
(21) Numéro de dépôt: 15784080.2
(22) Date de dépôt: 01.10.2015
(51) Int. Cl.: G01H 9/00

(54) **TRANSDUCTEUR OPTO-MÉCANIQUE POUR LA DÉTECTION DE VIBRATIONS**
OPTOMECHANISCHER WANDLER FÜR DEN NACHWEIS VON SCHWINGUNGEN
OPTO-MECHANICAL TRANSDUCER FOR THE DETECTION OF VIBRATIONS

(30) Priorité: 01.10.2014 FR 1459383
(43) Date de publication de la demande: 09.08.2017
(73) Titulaire: Phonoptics, 91400 Orsay (FR)
(72) Inventeur: STAEHLE-BOULIANE, Vivien, F-91400 Saclay (FR); MALAVIEILLE, Jean-Michel, F-91540 Mennecy (FR); MALAVIEILLE, François-Louis, F-92290 Chatenay Malabry (FR)
(74) Mandataire: IP Trust
(86) Numéro de dépôt international: PCT/FR2015/052626
(87) Numéro de publication internationale: WO 2016/051096

(56) Documents cités:
- FR-A1- 2 739 445
- US-A- 4 678 902
- US-A- 5 120 953
- US-A- 5 262 884
- US-A1- 2002 012 115
- US-A1- 2006 192 974
- US-B1- 6 239 865

## Description

### Domaine de l'invention

La présente invention concerne le domaine des transducteurs opto-mécanique pour la détection de vibrations, de variations de pression continues ou périodiques et pour la captation de signaux acoustiques dans l'air ou dans un fluide, y compris dans des milieux hostiles.

Elle concerne plus particulièrement le domaine des transducteurs mettant en œuvre la variation optique de la lumière transmise par une ou plusieurs fibres optiques.

### Etat de la technique

On connaît dans l'état de la technique une solution décrite dans le brevet européen EP0082615. Ce brevet décrit un transducteur pour détecter des signaux acoustiques ou équivalents qui lui sont appliqués. Le transducteur comporte deux pièces striées formant un réseau optique interagissant avec un guide d'ondes à fibres optiques. Des moyens élastiques fixés aux pièces striées assurent un déplacement perpendiculairement au guide d'onde.

On connaît aussi la solution proposée par le brevet européen EP0027540 décrivant un transducteur optique avec un guide d'onde optique muni de deux trajets pour la propagation de la lumière qui est déformé en réponse à des variations de pression acoustique ou autres paramètres à mesurer pour moduler l'amplitude de la lumière propagée le long des deux trajets avec des polarités opposées. Les sorties de lumière des deux trajets sont captées par des photodétecteurs et appliquées à un circuit de différentiation électrique.

La demande de brevet internationale WO 1993007686 décrit un microphone optique qui comprend une membrane vibrante définissant un diaphragme destiné à recevoir des signaux acoustiques. Un élément optique tel qu'une lentille est fixée pour vibrer avec la membrane en relation directe avec les signaux acoustiques d'entrée. Des fibres optiques fixes sont disposées dans l'alignement avec la lentille afin d'orienter la lumière initiale vers la lentille et de transmettre la lumière orientée à partir de la lentille.

On connaît encore dans l'art antérieur un capteur/microphone optique décrit dans le brevet américain US6462808. Il comporte une source de lumière couplée à un guide d'onde pour transmettre un faisceau de lumière. L'une des extrémités du guide d'onde présente une surface en pointe avec un angle déterminé par la loi de réfraction de Snell :
sin alpha₁ /sin alpha₂ = n₁ /n₂ dans lequel :
- alpha₁ est l'angle de trajet du faisceau de lumière au travers du média guide d'onde
- alpha₂ est l'angle de trajet du faisceau de lumière dans le second média en sortie de la surface en pointe,
- n₁ et n₂ sont les indices de lumière du média à guide d'onde de lumière et le second média.

Une surface réfléchissante est disposée à une distance optimale par rapport à la surface en pointe déterminée par l'angle alpha₂. Le guide d'onde présente à sa surface externe au moins d'une façon adjacente des moyens pour éviter que les ondes de lumière ne soient réfléchies sur la surface par effet de réflexion arrière dans le guide d'onde. Un détecteur de lumière agencé pour recevoir la lumière réfléchie à partir de la surface réfléchissante.

On connaît aussi dans l'état de la technique des solutions de métrologies, qui ne sont pas des transducteurs mais des équipements pour la mesure de distance.

La demande internationale US6239865 décrit un exemple de capteur et procédé pour mesurer la distance ou/et les propriétés physiques d'un matériau. Ce document décrit un capteur de mesure de distances vers un milieu et/ou des propriétés physiques, incluant un boîtier, au moins une paire de fibres optiques, chacune ayant une partie d'extrémité d'entrée et une partie d'extrémité de sortie. La partie d'extrémité d'entrée de la première fibre optique est connectable à une source de lumière et la partie d'extrémité de sortie de la seconde fibre optique est connectable à des moyens de mesure d'intensité lumineuse. Une tête de capteur, incluant la partie d'extrémité d'entrée de la seconde fibre optique est disposée à proximité de la partie d'extrémité de sortie de la première fibre optique.

Ces deux extrémités forment entre elles un angle thêta par rapport à l'axe, la lumière sortant de la partie d'extrémité de sortie de la première fibre optique étant réfléchie par une surface d'un milieu selon un angle d'incidence bêta et dans lequel l'angle bêta = f(alpha, thêta).

On connaît aussi dans l'état de la technique le brevet FR2739445. Ce brevet ne concerne pas un transducteur, mais contient un enseignement sur un procédé de mesure physique par réflectométrie, comportant une étape essentielle d'étalonnage. Il décrit un dispositif formant un capteur optique comprenant une fibre optique possédant une extrémité polie suivant au moins deux plans inclinés et sécants en formant dioptre en toit ou en pyramide et une autre extrémité couplée à un ensemble photo-émetteur/photo-détecteur, un moyen propre à déplacer de façon contrôlée l'extrémité polie relativement à un échantillon, ainsi que des moyens d'analyse de la lumière de retour, revenant par la fibre. L'intensité de cette lumière de retour obéit à une courbe de réponse en intensité (I) étalonnable en fonction de la distance (Z) à l'échantillon ainsi que de ses caractéristiques optiques et possède un maximum (A) à distance fixe de l'échantillon. Les moyens d'analyse sont agencés pour déterminer l'une des grandeurs du groupe comprenant la position relative ou absolue de l'échantillon et l'une au moins des caractéristiques optiques de celui-ci.

Le procédé objet de ce brevet, dont la finalité est une mesure de distance, comporte les étapes suivantes :
a) prévoir une fibre optique possédant une extrémité polie suivant au moins deux plans inclinés par rapport à l'axe de cette fibre et sécants en formant dioptre en toit ou en pyramide, la lumière issue de la fibre étant ainsi divisée en au moins deux faisceaux convergents,
b) soumettre ladite extrémité polie de cette fibre à un déplacement relatif contrôlé au voisinage d'un échantillon-cible,
c) faire venir par la fibre une lumière de caractéristiques connues,
d) mesurer l'intensité de la lumière de retour, revenant par la fibre, après réflexion sur ledit échantillon, cette mesure de la lumière de retour obéissant à une courbe de réponse en intensité (I) qui est étalonnable en fonction de la distance (Z) à l'échantillon ainsi que des caractéristiques optiques de l'échantillon, et qui possède un maximum (A) à distance sensiblement fixe de l'échantillon, et analyser cette intensité en fonction dudit déplacement relatif, en vue d'une détermination de l'une des grandeurs du groupe comprenant, d'une part, la position relative ou absolue de l'échantillon, et d'autre part, l'une au moins des caractéristiques optiques de l'échantillon.

### Inconvénients de l'art antérieur

Les solutions de l'art antérieur portant sur des transducteurs opto-mécaniques présentent plusieurs inconvénients.

Certaines solutions nécessitent l'emploi de plusieurs fibres, une pour le faisceau entrant, l'autre pour le faisceau sortant. Ceci complique considérablement l'utilisation dans des environnements hostiles.

Par ailleurs, les solutions de l'art antérieur nécessitent un assemblage complexe sur le plan optique comme sur le plan mécanique. Ces solutions conduisent à des transducteurs fragiles, difficiles à régler et peu stables.

Enfin, la solution proposée par le brevet FR2739445, pour la mesure de distance, implique un point de fonctionnement de la tête optique très sensible et conduisant à des dérives importantes des performances à la moindre variation mécanique, notamment en cas de déréglage ou de modification des positionnements sous l'effet de la dilation thermique.

L'enseignement des documents concernant des procédés et des équipements de métrologie est adapté à des mesures de distance statique.

### Solution apportée par l'invention

Afin de remédier à ces inconvénients, l'invention concerne selon son acception la plus générale un transducteur opto-mécanique comprenant une fibre optique présentant une extrémité distale pointue polie placée en face d'une surface réfléchissante et une extrémité proximale étant raccordée à un coupleur combinant une fibre optique d'éclairage associée à une source lumineuse et une fibre optique de mesure associée à un photo-détecteur, ledit élément réfléchissant présentant une zone mobile avec une composante axiale, caractérisé en ce que la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

On entendra par « distale » le coté de la fibre destinée à l'acquisition des phénomènes physique, et par « proximale » le coté où se trouve l'électronique de traitement, ainsi que le coupleur optique. Entre les deux extrémités s'étend la fibre optique unique, qui peut présenter une grande longueur, typiquement de plusieurs centaines de mètres voire de kilomètres pour des applications telles que des réseaux d'hydrophones marins.

De préférence, l'extrémité distale de la fibre optique présente au moins deux facettes polies sécantes en formant dioptre en toit, en pyramide ou en cône.

Selon une première variante, ladite zone mobile est constituée par une membrane déformable élastiquement.

Selon une variante particulière, ladite membrane déformable est fixée périphériquement sur un cadre rigide lié mécaniquement au support de l'extrémité distale de la fibre optique.

Selon un mode de réalisation particulier, l'extrémité comprenant l'extrémité distale de la fibre optique et ladite membrane sont encapsulés dans une enveloppe présentant un évent en avant et en arrière de la membrane pour l'équilibrage des pressions statiques.

Selon un autre mode de réalisation, ladite membrane présente une suspension élastique.

Selon une deuxième variante, ladite zone mobile est constituée par une lame élastique fixée par une extrémité sur un cadre rigide lié mécaniquement au support de l'extrémité distale de la fibre optique. La fréquence propre de la lame est entre hertz et kilohertz.

Selon un mode de mise en œuvre particulier, ladite lame élastique est fixée par une extrémité sur un cadre rigide lié mécaniquement au support de l'extrémité distale de la fibre optique, la fréquence propre de la lame étant supérieure à 5 hertz.

Selon un autre mode de mise en œuvre, ladite zone mobile est constituée par une lame souple fixée par une extrémité sur un cadre rigide lié mécaniquement au support de l'extrémité distale de la fibre optique, la fréquence propre de la lame étant inférieure à 5 hertz.

Selon un autre mode de mise en œuvre particulier, la fibre optique comporte du coté distal un multiplexeur assurant le couplage de plusieurs segments de fibres optiques présentant chacune une extrémité distale pointue positionnée en regard de ladite surface réfléchissante.

Selon un autre mode de mise en œuvre particulier, la fibre optique comporte du coté proximale un multiplexeur assurant le couplage de plusieurs couples de fibres optiques fonctionnant chacun à une bande de longueurs d'ondes distincte.

L'invention concerne également différentes applications de ce concept inventif.

Elle concerne notamment un microphone opto-mécanique, un manomètre ou un capteur de pression opto-mécanique comprenant une fibre optique présentant une extrémité distale pointue polie placée en face d'une surface réfléchissante et une extrémité proximale étant raccordée à un coupleur combinant une fibre optique d'éclairage associée à une source lumineuse et une fibre optique de mesure associée à un photo-détecteur, caractérisé en ce que ledit élément réfléchissant est formé par une membrane déformable présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

Elle concerne aussi un sonar opto-mécanique ou un hydrophone comprenant une fibre optique présentant une extrémité distale pointue polie placée en face d'une surface réfléchissante et une extrémité proximale étant raccordée à un coupleur combinant une fibre optique d'éclairage associée à une source lumineuse et une fibre optique de mesure associée à un photo-détecteur, caractérisé en ce que ledit élément réfléchissant est formé par une membrane déformable présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75, ledit sonar comportant un conduit d'équilibrage de la pression statique s'exerçant sur les deux faces de ladite membrane.

Elle concerne également un capteur de vibrations opto-mécanique ou un capteur biologique opto-mécanique comprenant une fibre optique présentant une extrémité distale pointue polie placée en face d'une surface réfléchissante et une extrémité proximale étant raccordée à un coupleur combinant une fibre optique d'éclairage associée à une source lumineuse et une fibre optique de mesure associée à un photo-détecteur, caractérisé en ce que ledit élément réfléchissant est formé par une poutre vibrante déformable solidaire d'un support rigide de fixation de l'extrémité distale de la dite fibre optique, ladite poutre vibrante présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75. Concernant le capteur biologique, ladite poutre est revêtue d'un activateur de surface apte à interagir spécifiquement avec un composant biochimique.

Elle concerne aussi une tête de forage ou une sonde de Pitot comprenant un capteur de pression opto-mécanique comprenant une fibre optique présentant une extrémité distale pointue polie placée en face d'une surface réfléchissante et une extrémité proximale étant raccordée à un coupleur combinant une fibre optique d'éclairage associée à une source lumineuse et une fibre optique de mesure associée à un photo-détecteur, caractérisé en ce que ledit élément réfléchissant est formé par une membrane déformable présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

### Description détaillée d'exemples non limitatifs de l'invention

La présente invention sera mieux comprise à la lecture de la description qui suit, concernant des exemples non limitatifs de réalisation, et se référant aux dessins annexés où :
- la figure 1 représente une vue schématique d'un capteur selon l'invention
- la figure 2 représente une vue schématique de l'extrémité distale de la fibre
- la figure 3 représente le diagramme de mesure de l'intensité réfléchie en fonction de la distance entre l'extrémité distale de la fibre et la surface réfléchissante
- la figure 4 représente une vue schématique d'une variante de réalisation
- la figure 5 représente le diagramme de mesure des intensités réfléchies de longueurs d'onde différentes en fonction de la distance entre l'extrémité distale de la fibre et la surface réfléchissante pour cette variante de réalisation
- la figure 6 représente une vue schématique d'une deuxième variante de réalisation
- la figure 7 représente le diagramme de mesure de l'intensité réfléchie en fonction de la distance entre l'extrémité distale de la fibre et la surface réfléchissante pour cette deuxième variante de réalisation
- la figure 8 représente une vue schématique d'une troisième variante de réalisation
- la figure 9 représente une vue schématique d'une quatrième variante de réalisation

### Description du principe général d'un transducteur selon l'invention

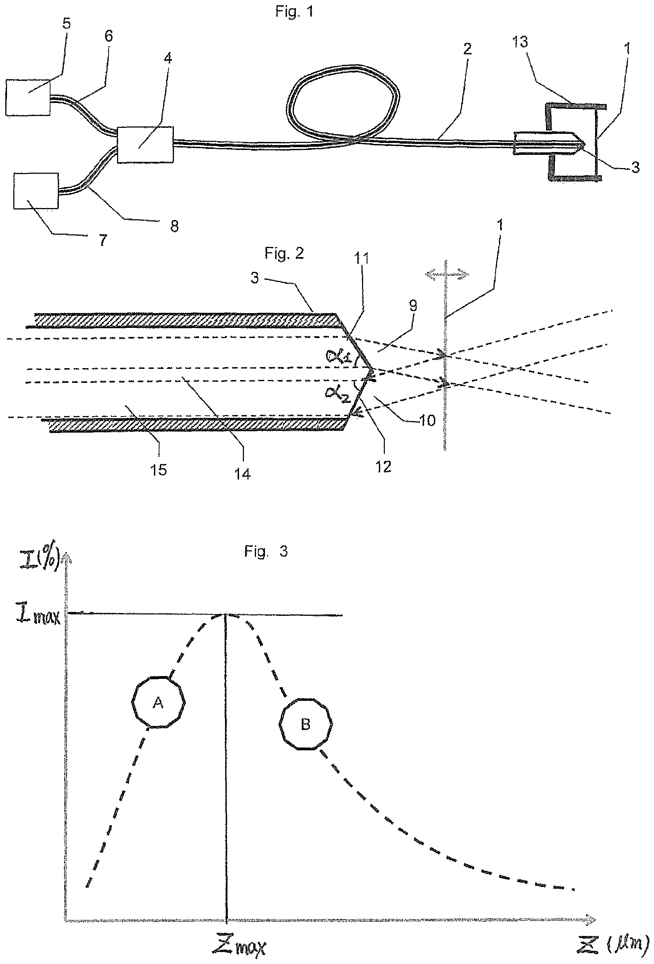

L'invention porte dans le premier exemple de réalisation illustré par les figures 1 à 3 sur un transducteur destiné à mesurer les variations de pression s'exerçant sur une membrane (1). Un tel transducteur peut être utilisé pour capter des sons, et former ainsi un microphone ou un sonar ou un hydrophone lorsque le milieu dans lequel il est disposé est liquide. Il peut aussi constituer un capteur de pression pour mesurer de très faibles pressions, ou au contraire de grandes pressions, par exemple pour l'analyse d'explosions.

Le transducteur comprend une fibre optique (2), possédant une extrémité distale (3) polie suivant au moins deux plans (faces) inclinés par rapport à l'axe de cette fibre et sécants en formant dioptre en toit ou en pyramide.

L'extrémité proximale de la fibre (2) est raccordée à un coupleur fibré en « Y » (4) permettant de mélanger :
- un signal d'entrée provenant d'une source lumineuse (5) par l'intermédiaire d'un premier tronçon de fibre (6), et
- un signal de sortie transmis à un photodétecteur (7) par l'intermédiaire d'un deuxième tronçon de fibre (8).

L'unique fibre optique (2) est utilisée à la fois en temps qu'émetteur (acheminement de la lumière émise par la source lumineuse (5)) et récepteur (recueillement de la lumière réfléchie sur la membrane (1) réfléchissante), ce qui permet de réduire notablement les coûts de fabrication et l'encombrement, tout en autorisant une mesure à une distance de l'échantillon aussi grande que les besoins le nécessitent.

La fibre (2) transmet un faisceau (9) dans une direction correspondant à l'angle de réfraction de la fibre, défini par les indices de l'âme de la fibre et du milieu extérieur.

Une partie (10) de la lumière (dite lumière de retour) qui est réfléchie sur la surface réfléchissante de la membrane (1) pénètre dans la fibre (2) par l'extrémité distale (3). Dans l'exemple décrit, la membrane (1) s'étend dans un plan perpendiculaire à l'axe de l'extrémité distale (3) de la fibre optique.

L'intensité de lumière qui revient dans la fibre varie en fonction de la distance entre l'extrémité distale de la fibre et la surface de la membrane (1), avec une courbe de réponse représentée en figure 3, correspondant à l'intensité I de la lumière de retour en fonction de la distance fibre-membrane Z.

L'extrémité (3) de la fibre est polie suivant au moins deux plans inclinés (11, 12) respectivement d'un angle Alpha₁ et Alpha₂ (de préférence égaux) par rapport à l'axe normal à la section droite de la fibre et sécants en forme de toit ou de pyramide. Cette extrémité présente une courbe de réponse sensiblement en cloche et par conséquent comportant un maximum. Une telle courbe est représentée sur la figure 3, où l'on a représenté l'intensité relative réfléchie en pourcentage (%) de l'intensité maximale réfléchie en fonction de la distance membrane-fibre Z en micromètre (µm).

La valeur de Zₘₐₓ dépend essentiellement de l'angle Alpha, tandis que la valeur de Iₘₐₓ dépend du type de la fibre et des caractéristiques optiques de la surface de l'échantillon (principalement sa réflectivité à la longueur d'onde de la lumière sonde). Plus l'angle Alpha est grand, plus Zₘₐₓ est grand. De préférence, cet angle Alpha doit être choisi dans l'intervalle 50 degrés à 85 degrés.

Par ailleurs, le pic de la courbe de réponse est d'autant plus important que le faisceau lumineux émis par la fibre est étroit, ce qui dépend de l'ouverture numérique de cette fibre.

En conséquence, lorsque l'on effectue l'étalonnage d'une fibre à l'aide d'une pluralité d'échantillons, il est possible de fabriquer un tableau de couples de données relatives à chaque échantillon, chaque couple comportant une donnée d'intensité maximum ou Iₘₐₓ et une donnée de distance maximum ou Zₘₐₓ.

La distance de repos entre l'extrémité distale de la fibre (3) et la surface de la membrane (1) est déterminée de façon à être positionnée sur la courbe dans le figure 3 par deux points A et B, A étant positionné au niveau de la pente montante de la courbe et B étant positionné au niveau de la partie descendante de la courbe. Ces points A et B sont placés où le changement de l'intensité lumineuse réfléchie est le plus sensible par rapport au changement de la position de la membrane. Cette position peut être déterminée expérimentalement, par ajustements respectifs de la position au repos de la membrane (1), ou par calcul, ou encore par préréglage pour une fabrication en série d'un ensemble de transducteurs de mêmes caractéristiques.

La distance est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

La membrane (1) est suspendue par rapport à un châssis rigide (13) assurant également le maintien et le positionnement de l'extrémité distale (3) de la fibre optique.

La suspension peut être réalisée de toute manière connue, par exemple par la périphérie d'une membrane déformable élastiquement, par exemple une feuille métallisée.

Selon l'application visée, on recherchera une forte raideur, pour permettre la détection de vibrations de haute-fréquences acoustiques, ou au contraire de très faible raideur, pour mesurer de faibles variations de pression.

La fibre (2) comprend un coeur (14) d'indice n₁ entouré d'une gaine (15) d'indice n₂.

L'extrémité est taillée pour former deux surfaces planes sécantes dans l'exemple décrit.

Bien entendu, il peut y avoir trois plans, quatre plans, ou plus encore, formant une pyramide, ou un cône, ou bien on peut envisager d'utiliser deux plans inclinés sous deux angles différents, ou encore une forme conique.

Par ailleurs, la fibre peut être de tout type, comme par exemple monomode ou multimode, et à gradient d'indice ou à saut d'indice.

On choisira par exemple une fibre de type 100/140 multimode à saut d'indice, comprenant deux plans inclinés d'un même angle 0 d'environ 75 degrés par rapport à son axe, ce qui correspond à une distance maximale fibre-échantillon d'environ 150 *µ*m.

### Description d'une première variante de réalisation

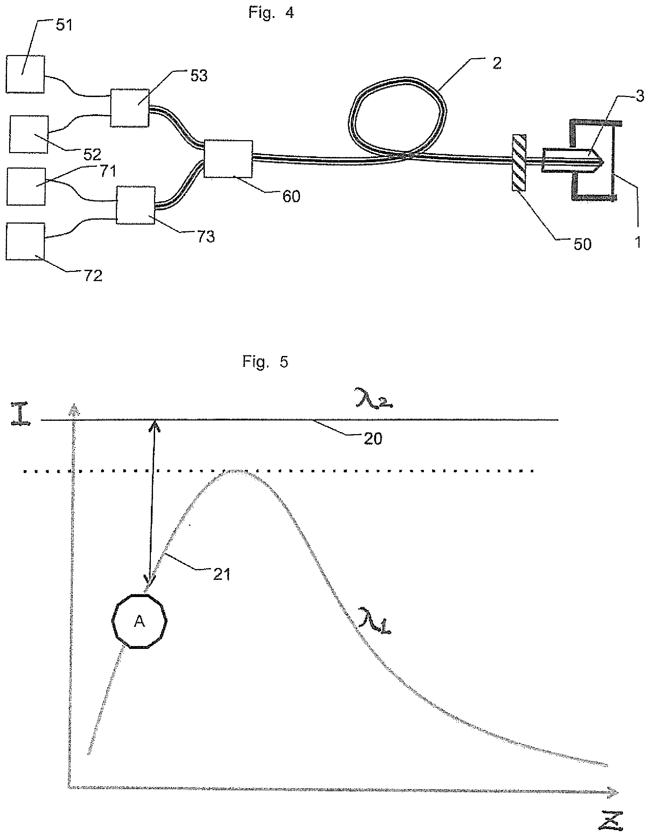

La figure 4 représente une variante de réalisation où la source lumineuse comprend deux longueurs d'onde distinctes, produites par une première source (51) dans une longueur d'onde lambda₂ et une seconde source (52) émettant dans une longueur d'onde lambda₁, ces deux sources transmettant la lumière par l'intermédiaire de fibres optiques couplées par un coupleur en Y (53) à la fibre principale (2).

De même, la détection comprend un premier photodétecteur (71) pour la mesure de la lumière dans la bande lambda₁ et un second photodétecteur pour la mesure de la lumière dans la bande lambda₂, recevant des faisceaux par l'intermédiaire d'un coupleur (73). La fibre optique principale (2) est raccordée à un multiplexeur (60) WDM (Wavelength Division Multiplexing en anglais) qui permet de faire passer plusieurs signaux de longueur d'onde différentes sur une seule fibre optique, en les mélangeant à l'entrée à l'aide d'un multiplexeur (MUX), et en les séparant à la sortie au moyen d'un démultiplexeur (DEMUX).

L'extrémité distale de la fibre (2) est équipée d'un filtre réjecteur de bande bloquant et réfléchissant l'une des longueurs d'onde Lambda₂.

La longueur d'onde Lambda₁ produit donc une réponse illustrée sur la figure 5 par la courbe (21), alors que la courbe (20), sensiblement constante, représente la réponse pour la longueur d'onde Lambda₂ bloquée par le filtre (50).

La courbe (21) varie non pas seulement en fonction de la distance entre l'extrémité distale (3) et la membrane, mais aussi en fonction des variations endogènes de la fibre (2) dues par exemple aux variations de température, de courbure de la fibre, du vieillissement de la fibre, etc. Les variations endogènes de la fibre (2) sont présentées également dans la courbe (20).

Par conséquent, la mesure de la différence d'intensité lumineuse dans les deux longueurs d'onde lambda₁ et lambda₂ permet d'obtenir une réponse indépendante des artefacts externes : les variations dues non pas au déplacement de la membrane (1) mais à des variations de l'intensité dans la fibre principale (2) où par les composants en amont sont neutralisés par une soustraction des signaux mesurés par les deux photodétecteurs (71, 72).

Une alternative consiste à utiliser une seule source lumineuse à spectre étendu, et deux filtres de bandes passantes différentes pour produire deux faisceaux de longueurs d'onde lambda₁ et lambda₂.

### Description d'une deuxième variante de réalisation

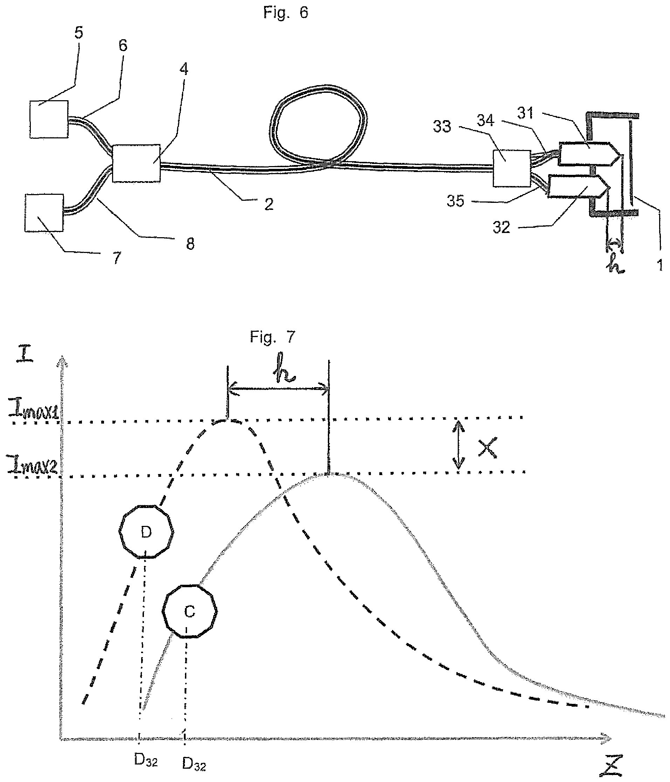

La figure 6 représente une deuxième variante de réalisation où la tête d'acquisition comporte deux (ou plusieurs) pointes de mesure (31, 32) positionnées en face d'une même membrane (1).

Un coupleur (33) situé à l'extrémité distale de la fibre principale (2) transmet la lumière à deux segments de fibres optiques (34, 35) dont l'extrémité est taillée en pointe comme décrit précédemment.

Il y a deux capteurs en pointe (31, 32) positionnés en face de la surface réfléchissante mais décalés dans la direction axiale l'une de l'autre d'une distance connue h. Cette distance est la même que celle entre les deux maximums de l'intensité réfléchie des deux capteurs en pointe montrée en figure 7. Quand la membrane est à une distance telle qu'il y ait un maximum d'intensité, on se situe sur une position quelconque mais non maximale pour l'autre pointe. Quand le signal passe d'un maximum d'intensité à un autre maximum d'intensité, on connait alors parfaitement le déplacement effectué par la membrane dans la direction axiale, puisqu'il correspond à la distance entre les deux pointes dans la direction axiale qui est définie lors du montage des fibres optiques sur le support fixe. C'est pour cette raison qu'on peut qualifier le système « d'auto-calibrant ». En figure 7, la différence de l'intensité « x » entre les deux maximums de courbes dépend de divers paramètres comme la nature de la pointe utilisée par rapport à l'autre pointe, l'atténuations du signal qui peut différer entre les deux pointes etc. Cette différence « x » peut être nulle ou non nulle.

### Description d'une troisième variante de réalisation

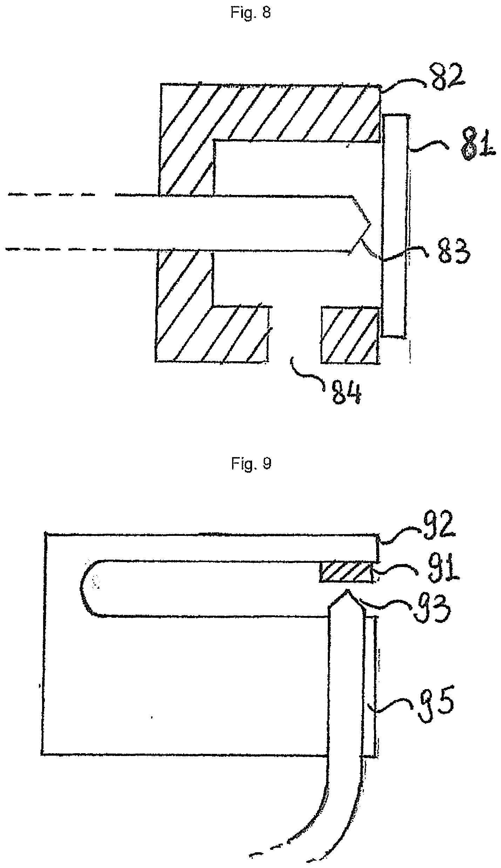

La figure 8 présente une variante de réalisation où l'extrémité distale de la fibre optique (83) et la membrane (81) sont encapsulées dans une enveloppe. L'enveloppe est formée par un cadre rigide (82), qui est lié mécaniquement au support de l'extrémité distale de la fibre optique dans un côté, et sur lequel la membrane est fixée périphériquement dans un autre côté. L'enveloppe présente un évent (84), qui relie la cavité interne délimitée par l'enveloppe avec le milieu extérieur. Les matériaux, aux états gaz ou liquide, peuvent circuler librement à travers l'évent afin d'atteindre l'équilibre entre la cavité interne pression P1 et la pression P2 du milieu extérieur.

### Description d'une quatrième variante de réalisation

La figure 9 représente une variante de réalisation où un élément réfléchissant, par exemple, un miroir (91) est présent sur une lame vibrante (92). Une extrémité de la lame vibrante est liée mécaniquement au support (95) de l'extrémité distale de la fibre optique (93). La fréquence de vibration de la lame varie de hertz jusqu'à kilohertz selon la forme et le matériau qui constituent cette lame, par exemple, une lame élastique en métal.

Une autre possibilité est d'attacher le support de fibre optique sur un autre support dont on cherche à mesurer sa vibration, par exemple, un moteur. Tandis que le support de fibre optique suit le mouvement du moteur, la zone mobile de l'élément réfléchissant ne suit pas ce mouvement en raison du couplage faible par l'extrémité. La distance axiale entre l'extrémité distale de la fibre optique et ladite surface réfléchissante change en fonction du mouvement du moteur. Par l'analyse de l'intensité lumineuse réfléchie, le mouvement vibratoire du moteur peut être bien illustré.

## Revendications

1. Transducteur opto-mécanique comprenant une fibre optique (2) présentant une extrémité distale pointue polie (3) placée en face d'une surface réfléchissante et une extrémité proximale étant raccordée à un coupleur (4) combinant une fibre optique d'éclairage (6) associée à une source lumineuse (5) et une fibre optique de mesure (8) associée à un photo-détecteur (7), ledit élément réfléchissant présentant une zone mobile avec une composante axiale (1), **caractérisé en ce que** la distance axiale entre l'extrémité distale (3) de la fibre optique (2) et ladite surface réfléchissante (1) au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

2. Transducteur opto-mécanique selon la revendication 1 **caractérisé en ce que** l'extrémité distale (3) de la fibre optique présente au moins deux facettes polies sécantes en formant dioptre en toit, en pyramide ou en cône.

3. Transducteur opto-mécanique selon la revendication 1 **caractérisé en ce que** ladite zone mobile est constituée par une membrane (1) déformable élastiquement.

4. Transducteur opto-mécanique selon la revendication 1 **caractérisé en ce que** ladite zone mobile est constituée par une membrane déformable (1) fixée périphériquement sur un cadre rigide lié mécaniquement au support de l'extrémité distale de la fibre optique.

5. Transducteur opto-mécanique selon la revendication 3 ou 4 **caractérisé en ce que** l'extrémité de la fibre comprenant l'extrémité distale (3) de la fibre optique et ladite membrane (1) sont encapsulés dans une enveloppe présentant un évent pour l'équilibrage des pressions statiques.

6. Transducteur opto-mécanique selon la revendication 3 ou 4 **caractérisé en ce que** ladite membrane (1) présente une suspension élastique.

7. Transducteur opto-mécanique selon la revendication 1 **caractérisé en ce que** ladite zone mobile est constituée par une lame élastique (1) fixée par une extrémité sur un cadre rigide lié mécaniquement au support de l'extrémité distale de la fibre optique, la fréquence propre de la lame étant entre hertz et kilohertz.

8. Transducteur opto-mécanique selon la revendication 1 **caractérisé en ce que** ladite zone mobile est constituée par une lame souple fixée par une extrémité sur un cadre rigide lié mécaniquement au support de l'extrémité distale de la fibre optique, la fréquence propre de la lame étant inférieure à 5 hertz.

9. Transducteur opto-mécanique selon l'une quelconque des revendications précédentes **caractérisé en ce que** la fibre optique comporte du coté distal un multiplexeur assurant le couplage de plusieurs segments de fibres optiques présentant chacune une extrémité distale pointue positionnée en regard de ladite surface réfléchissante.

10. Transducteur opto-mécanique selon l'une quelconque des revendications précédentes **caractérisé en ce que** la fibre optique comporte du coté proximale un multiplexeur assurant le couplage de plusieurs couples de fibres optiques fonctionnant chacun à une bande de longueurs d'ondes distincte.

11. Microphone opto-mécanique comprenant un transducteur opto-mécanique selon l'une quelconque des revendications précédentes.

12. Sonar opto-mécanique comprenant un transducteur opto-mécanique selon l'une quelconque des revendications 1 à 10, ledit sonar comportant un conduit d'équilibrage de la pression statique s'exerçant sur les deux faces de ladite membrane.

13. Manomètre opto-mécanique comprenant un transducteur opto-mécanique selon l'une quelconque des revendications 1 à 10.

14. Capteur de vibrations opto-mécanique comprenant un transducteur opto-mécanique selon l'une quelconque des revendications 1 à 10, **caractérisé en ce que** il comporte un élément réfléchissant formé par une poutre vibrante déformable solidaire d'un support rigide de fixation de l'extrémité distale de la dite fibre optique et de liaison avec un organe à analyser, ladite poutre vibrante présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75.

15. Capteur biologique opto-mécanique comprenant un transducteur opto-mécanique selon l'une quelconque des revendications 1 à 10, **caractérisé en ce que** il comporte un élément réfléchissant formé par une poutre vibrante déformable solidaire d'un support rigide de fixation de l'extrémité distale de la dite fibre optique, ladite poutre vibrante présentant une zone mobile avec une composante axiale, la distance axiale entre l'extrémité distale de la fibre optique et ladite surface réfléchissante au repos est déterminée pour que l'intensité lumineuse réfléchie I₀ soit égale à P.Iₘₐₓ où Iₘₐₓ désigne l'intensité lumineuse réfléchie maximale, et P est un paramètre compris entre 0,25 et 0,75, ladite poutre étant revêtue d'un activateur de surface apte à interagir spécifiquement avec un composant biochimique.

16. Tête de forage comprenant un capteur de pression opto-mécanique comprenant un transducteur opto-mécanique selon l'une quelconque des revendications 1 à 10.

17. Sonde de Pitot comprenant un capteur de pression opto-mécanique comprenant un transducteur opto-mécanique selon l'une quelconque des revendications 1 à 10.

## Patentansprüche

1. Optomechanischer Wandler, der eine optische Faser (2) umfasst, die ein poliertes spitzes distales Ende (3), das gegenüber einer reflektierenden Oberfläche angeordnet ist, und ein proximales Ende aufweist, das an einen Koppler (4) angeschlossen ist, der eine optische Beleuchtungsfaser (6), die einer Lichtquelle (5) zugeordnet ist, und eine optische Messfaser (8), die einem Fotodetektor (7) zugeordnet ist, kombiniert, wobei das reflektierende Element einen beweglichen Bereich mit einer axialen Komponente (1) aufweist, **dadurch gekennzeichnet, dass** der axiale Abstand zwischen dem distalen Ende (3) der optischen Faser (2) und der reflektierenden Oberfläche (1) in Ruhe so bestimmt wird, dass die reflektierte Lichtintensität I₀ gleich P.Iₘₐₓ ist, wobei Iₘₐₓ die maximale reflektierte Lichtintensität bezeichnet, und P ein Parameter zwischen 0,25 und 0,75 ist.

2. Optomechanischer Wandler nach Anspruch 1, **dadurch gekennzeichnet, dass** das distale Ende (3) der optischen Faser mindestens zwei sich schneidende polierte Facetten aufweist, die eine dach-, pyramiden-, oder kegelförmige Grenzfläche bilden.

3. Optomechanischer Wandler nach Anspruch 1, **dadurch gekennzeichnet, dass** der bewegliche Bereich aus einer elastisch verformbaren Membran (1) besteht.

4. Optomechanischer Wandler nach Anspruch 1, **dadurch gekennzeichnet, dass** der bewegliche Bereich aus einer verformbaren Membran (1) besteht, die peripher an einem starren Rahmen befestigt ist, der mechanisch mit dem Träger des distalen Endes der optischen Faser verbunden ist.

5. Optomechanischer Wandler nach Anspruch 3 oder 4, **dadurch gekennzeichnet, dass** das Ende der Faser, das das distale Ende (3) der optischen Faser umfasst, und die Membran (1) in eine Ummantelung eingekapselt sind, die eine Entlüftungsöffnung zum Ausgleich der statischen Drücke aufweist.

6. Optomechanischer Wandler nach Anspruch 3 oder 4, **dadurch gekennzeichnet, dass** die Membran (1) eine elastische Aufhängung aufweist.

7. Optomechanischer Wandler nach Anspruch 1, **dadurch gekennzeichnet, dass** der bewegliche Bereich aus einer elastischen Zunge (1) besteht, die mit einem Ende an einem starren Rahmen befestigt ist, der mechanisch mit dem Träger des distalen Endes der optischen Faser verbunden ist, wobei die Eigenfrequenz der Zunge zwischen Hertz und Kilohertz liegt.

8. Optomechanischer Wandler nach Anspruch 1, **dadurch gekennzeichnet, dass** der bewegliche Bereich aus einer biegsamen Zunge besteht, die mit einem Ende an einem starren Rahmen befestigt ist, der mechanisch mit dem Träger des distalen Endes der optischen Faser verbunden ist, wobei die Eigenfrequenz der Zunge unter 5 Hertz liegt.

9. Optomechanischer Wandler nach einem der vorhergehenden Ansprüche, **dadurch gekennzeichnet, dass** die optische Faser auf der distalen Seite einen Multiplexer umfasst, der die Kopplung mehrerer Segmente optischer Fasern sicherstellt, die jeweils ein spitzes distales Ende aufweisen, das gegenüber der reflektierenden Oberfläche positioniert ist.

10. Optomechanischer Wandler nach einem der vorhergehenden Ansprüche, **dadurch gekennzeichnet, dass** die optische Faser auf der proximalen Seite einen Multiplexer umfasst, der die Kopplung mehrerer Paare optischer Fasern gewährleistet, die jeweils auf einem separaten Wellenlängenband arbeiten.

11. Optomechanisches Mikrofon, das einen optomechanischen Wandler nach einem der vorhergehenden Ansprüche umfasst.

12. Optomechanisches Sonar, das einen optomechanischen Wandler nach einem der Ansprüche 1 bis 10 umfasst, wobei das Sonar eine Leitung zum Ausgleich des statischen Drucks umfasst, der auf beide Seiten der Membran ausgeübt wird.

13. Optomechanisches Druckmessgerät, das einen optomechanischen Wandler nach einem der Ansprüche 1 bis 10 aufweist.

14. Optomechanischer Schwingungssensor, der einen optomechanischen Wandler nach einem der Ansprüche 1 bis 10 umfasst, **dadurch gekennzeichnet, dass** er ein reflektierendes Element umfasst, das durch einen verformbaren Schwingungsbalken gebildet wird, der mit einem starren Träger zur Befestigung des distalen Endes der optischen Faser und zur Verbindung mit einem zu analysierenden Element in einem Stück verbunden ist, wobei der Schwingungsbalken einen beweglichen Bereich mit einer axialen Komponente aufweist, und der axiale Abstand zwischen dem distalen Ende der optischen Faser und der reflektierenden Oberfläche in Ruhe so bestimmt wird, dass die reflektierte Lichtintensität I₀ gleich P.Iₘₐₓ ist, wobei Iₘₐₓ die maximale reflektierte Lichtintensität bezeichnet, und P ein Parameter zwischen 0,25 und 0,75 ist.

15. Optomechanischer biologischer Sensor, der einen optomechanischen Wandler nach einem der Ansprüche 1 bis 10 aufweist, **dadurch gekennzeichnet, dass** er ein reflektierendes Element umfasst, das durch einen verformbaren Schwingungsbalken gebildet wird, der mit einem starren Träger zur Befestigung des distalen Endes der optischen Faser und zur Verbindung mit einem zu analysierenden Element in einem Stück verbunden ist, wobei der Schwingungsbalken einen beweglichen Bereich mit einer axialen Komponente enthält, und der axiale Abstand zwischen dem distalen Ende der Lichtleitfaser und der reflektierenden Fläche in Ruhe so bestimmt wird, dass die reflektierte Lichtintensität I₀ gleich P.Iₘₐₓ ist, wobei Iₘₐₓ die maximale reflektierte Lichtintensität bezeichnet, und P ein Parameter zwischen 0,25 und 0,75 ist, wobei der Balken mit einem Oberflächenaktivator beschichtet ist, der in der Lage ist, spezifisch mit einer biochemischen Komponente zu interagieren.

16. Bohrkopf, der einen optomechanischen Drucksensor aufweist, der einen optomechanischen Wandler nach einem der Ansprüche 1 bis 10 umfasst.

17. Pitotrohr, das einen optomechanischen Drucksensor aufweist, der einen optomechanischen Wandler nach einem der Ansprüche 1 bis 10 aufweist.

## Claims

1. Optomechanical transducer, comprising an optical fiber (2) having a polished pointed distal end (3) placed in front of a reflective surface and a proximal end connected to a coupler (4) which combines an illuminating optical fiber (6) linked to a light source (5) and a measuring optical fiber (8) linked to a photodetector (7), said reflective element having a mobile region with an axial component (1), **characterized in that** the axial distance between the distal end (3) of the optical fiber (2) and said reflective surface (1) at rest is determined such that the reflected light intensity I₀ is equal to P.Iₘₐₓ, where Iₘₐₓ denotes the maximum reflected light intensity and P is a parameter between 0.25 and 0.75.

2. Optomechanical transducer according to claim 1, **characterized in that** the distal end (3) of the optical fiber has at least two intersecting polished facets forming a diopter in the shape of a roof, pyramid, or cone.

3. Optomechanical transducer according to claim 1, **characterized in that** said movable region consists of an elastically deformable membrane (1).

4. Optomechanical transducer according to claim 1, **characterized in that** said movable region consists of a deformable membrane (1) peripherally fixed to a rigid frame that is mechanically connected to the carrier of the distal end of the optical fiber.

5. Optomechanical transducer according to either claim 3 or claim 4, **characterized in that** the end of the fiber comprising the distal end (3) of the optical fiber and said membrane (1) are encapsulated in a shell having a vent for balancing the static pressure.

6. Optomechanical transducer according to either claim 3 or claim 4, **characterized in that** said membrane (1) has a resilient suspension.

7. Optomechanical transducer according to claim 1, **characterized in that** said movable region consists of a resilient leaf (1) fixed by one end on a rigid frame that is mechanically connected to the carrier of the distal end of the optical fiber, the natural frequency of the leaf being between hertz and kilohertz.

8. Optomechanical transducer according to claim 1, **characterized in that** said movable region consists of a flexible leaf fixed by one end on a rigid frame that is mechanically connected to the carrier of the distal end of the optical fiber, the natural frequency of the leaf being less than 5 hertz.

9. Optomechanical transducer according to any of the preceding claims, **characterized in that** the optical fiber comprises, on the distal side, a multiplexer which couples a plurality of segments of optical fibers each having a pointed distal end positioned facing said reflective surface.

10. Optomechanical transducer according to any of the preceding claims, **characterized in that** the optical fiber comprises, on the proximal side, a multiplexer which couples a plurality of pairs of optical fibers each operating at a distinct wavelength band.

11. Optomechanical microphone comprising an optomechanical transducer according to any of the preceding claims.

12. Optomechanical sonar comprising an optomechanical transducer according to any of claims 1 to 10, said sonar comprising a duct for balancing the static pressure exerted on the two faces of said membrane.

13. Optomechanical pressure gauge comprising an optomechanical transducer according to any of claims 1 to 10.

14. Optomechanical vibration sensor comprising an optomechanical transducer according to any of claims 1 to 10, **characterized in that** it comprises a reflective element formed by a deformable vibrating beam secured to a rigid carrier for fixing the distal end of said optical fiber and for connection to a body to be analyzed, said vibrating beam having a movable region with an axial component, the axial distance between the distal end of the optical fiber and said reflective surface at rest being determined such that the reflected light intensity I₀ is equal to P.Iₘₐₓ, where Iₘₐₓ denotes the maximum reflected light intensity and P is a parameter between 0.25 and 0.75.

15. Optomechanical biological sensor comprising an optomechanical transducer according to any of claims 1 to 10, **characterized in that** it comprises a reflective element formed by a deformable vibrating beam secured to a rigid carrier for fixing the distal end of said optical fiber, said vibrating beam having a movable region with an axial component, the axial distance between the distal end of the optical fiber and said reflective surface at rest being determined such that the reflected light intensity I₀ is equal to P.Iₘₐₓ, where Iₘₐₓ denotes the maximum reflected light intensity and P is a parameter between 0.25 and 0.75, said beam being coated with a surface activator suitable for interacting specifically with a biochemical component.

16. Drilling head comprising an optomechanical pressure sensor having an optomechanical transducer according to any of claims 1 to 10.

17. Pitot probe comprising an optomechanical pressure sensor having an optomechanical transducer according to any of claims 1 to 10.
